Europäisches Patentamt

European Patent Office

Office européen des brevets

(11) Veröffentlichungsnummer: **0 209 108**
**A2**

## (12) EUROPÄISCHE PATENTANMELDUNG

(21) Anmeldenummer: 86109656.8

(22) Anmeldetag: 14.07.86

(51) Int. Cl.⁴: **G 02 B 27/14**

(30) Priorität: 15.07.85 DE 3525228

(43) Veröffentlichungstag der Anmeldung: **21.01.87**
**Patentblatt 87/4**

(84) Benannte Vertragsstaaten: **AT BE CH DE FR GB IT LI LU NL SE**

(71) Anmelder: **D. Swarovski & Co., Postfach 15, A-6112 Wattens (AT)**

(72) Erfinder: **Rolder, Konrad, Kirchstrasse 14, A-6060 Mils (AT)**

(74) Vertreter: **Kador & Partner, Corneliusstrasse 15, D-8000 München 5 (DE)**

(54) **Optisches Element.**

(57) Optisches Element mit einer Strahlenteilerschicht, die durch ihr Reflexions-/Transmissionsverhalten eine Teilung und/oder Zusammenführung optischer Strahlen bewirkt, wobei das optische Element als Linse ausgebildet sein kann, die Fügefläche nur teilweise mit der Strahlenteilerschicht bedeckt sein kann und/oder zwei oder mehr Fügeflächen vorgesehen sein können.

EP 0 209 108 A2

Die Erfindung bezieht sich auf ein optisches Element mit einer Strahlenteilerschicht, die durch ihr Reflexions-/Transmissionsverhalten eine Teilung und/oder Zusammenführung optischer Strahlen bewirkt.

Mit den erfindungsgemäßen optischen Elementen können Informationen, beispielsweise ein Fadenkreuz, in den Strahlengang eingespiegelt oder Informationen ausgespiegelt werden, beispielsweise zur Helligkeitsmessung.

Physikalische Strahlenteiler in Form von Teilerwürfeln sind bereits bekannt. Gleichmäßig im gesamten Querschnitt werden die Lichtstrahlen entsprechend Transmissionsgrad und Reflexionsgrad aufgeteilt.

Die bekannten Teilerwürfel haben jedoch den Nachteil, daß sie voluminös sind und dadurch Gewicht und Baulänge der Geräte erhöhen.

Der Erfindung liegt die Aufgabe zugrunde, optische Elemente zu schaffen, die die vorgenannten Nachteile nicht aufweisen und eine optimale Einspiegelung bzw. Ausspiegelung von Informationen erlauben, ohne die optische Qualität des Gerätes zu beeinträchtigen.

Der Erfindung liegt die Erkenntnis zugrunde, daß diese Aufgabe durch eine besondere Gestaltung des Strahlenteilers bzw. der Strahlenteilerschicht gelöst werden kann.

Gegenstand der Erfindung ist ein optisches Element aus mindestens zwei zusammengefügten Teilen, wobei die Fügefläche eine Neigung zur optischen Achse aufweist und eine Strahlenteilerschicht trägt, die durch ihr Reflexions-/Transmissionsverhalten eine Teilung und/oder Zusammenführung optischer Strahlen bewirkt, das dadurch gekennzeichnet ist, daß zumindest eine der Grenzflächen des optischen Elements eine sammelnde oder zerstreuende optische Wirkung aufweist.

Der Strahlenteiler ist somit als Linse ausgebildet und ein integraler Bestandteil des optischen Systems, und nicht ein zusätzliches Element, wie es der bekannte Teilerwürfel darstellt. Eine von der Optik her erforderliche Linse kann also zusätzlich die Funktion eines Strahlenteilers übernehmen.

Durch diese erfindungsgemäße Ausgestaltung können Gewicht und Kosten eingespart und die Baulänge des Gerätes entscheidend verringert werden.

Gegenstand der Erfindung ist ferner ein optisches Element aus mindestens zwei zusammengefügten Teilen, wobei die Fügefläche eine Neigung zur optischen Achse aufweist und eine Strahlenteilerschicht trägt, die durch ihr Reflexions-/Transmissionsverhalten eine Teilung und/oder Zusammenführung optischer Strahlen bewirkt, das dadurch gekennzeichnet ist, daß die Fügefläche nur teilweise mit Strahlenteilerschicht bedeckt ist.

Für verschiedene Anwendungen, beispielsweise zur Einspiegelung von Informationen in Form von Zahlen, ist es vorteilhaft, wenn diese Information nur in einem konkreten Bereich des Strahlenquerschnitts eingeblendet wird. Durch die örtliche Begrenzung der Strahlenteilerschicht wird ferner erreicht, daß in den nicht mit Strahlenteilerschicht bedeckten Bereichen des Strahlenquerschnitts die optischen Eigenschaften durch den Strahlenteiler im wesentlichen unverändert bleiben.

Gegenstand der Erfindung ist schließlich ein optisches Element aus mindestens zwei zusammengefügten Teilen, wobei die Fügefläche eine Neigung zur optischen Achse aufweist und eine Strahlenteilerschicht trägt, die durch ihr Reflexions-/Transmissionsverhalten eine Teilung und/oder Zusammenführung optischer Strahlen bewirkt, das dadurch gekennzeichnet ist, daß das optische Element zwei oder mehr Fügeflächen aufweist.

Durch diese Ausgestaltung des erfindungsgemäßen optischen Elementes ist es auf einfache Weise möglich, zwei oder mehr Informationen unabhängig voneinander einzuspiegeln und/oder auszuspiegeln.

Gemäß einer bevorzugten Ausführungsform nimmt die Fügefläche nur einen Teil des Strahlengangquerschnittes ein. Dies bewirkt ebenso wie bei einer nur teilweisen Aufbringung von Strahlenteilerschicht, daß der Informationsbereich örtlich begrenzt bleibt und die optischen Eigenschaften des Gerätes, insbesondere die Helligkeit, weitestgehend erhalten bleiben.

Vorzugsweise ist die Dicke des optischen Elements in Richtung der optischen Achse geringer als senkrecht dazu. Die Ausgestaltung in Form einer Platte ist besonders vorteilhaft.

Die Fügefläche ist vorzugsweise azentrisch nur teilweise mit der Strahlenteilerschicht bedeckt. Das Aufbringen der Strahlenteilerschicht in Form einer Ellipse in solcher Art, daß der Strahlenteilerbereich senkrecht zur optischen Achse und somit für den Betrachter kreisförmig ist, hat sich besonders bewährt.

4

Zur Verbesserung der optischen Eigenschaften wird die nicht mit Strahlenteilerschicht bedeckte Fügefläche vorzugsweise mit einer Antireflexschicht versehen.

Es kommt auch in Betracht, die Fügefläche außeraxial zur optischen Achse anzuordnen. Üblicherweise nimmt die Fügefläche einen Winkel von 45° zur optischen Achse ein. Für besondere Ausführungen kann es jedoch vorteilhaft sein, auch andere Winkel als 45° zu wählen. Zur Ein- und Ausspiegelung mehrerer Informationen kann das optische Element vorzugsweise auch zwei oder mehr Fügeflächen, die ganz oder teilweise mit Strahlenteilerschicht bedeckt sind, aufweisen.

Die Erfindung wird nachstehend anhand der Zeichnung, die beispielshafte Ausführungsformen zeigt, näher erläutert. Es zeigen:

Figur 1 ein optisches Element mit Strahlenteilerschicht in Form einer Sammellinse in Seitenansicht;

Figur 2 das optische Element gemäß Figur 1 in Vorderansicht;

Figur 3 ein optisches Element in Form einer Zerstreuungslinse mit zwei Fügeflächen in Seitenansicht und

Figur 4 ein optisches Element mit sechs Fügeflächen in Vorderansicht.

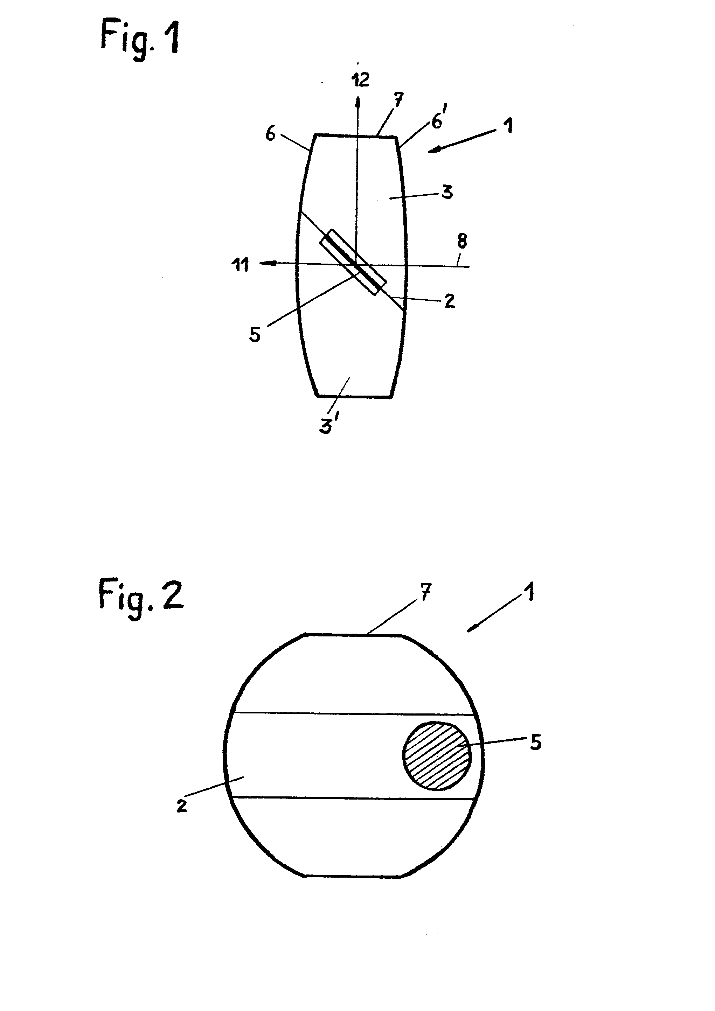

Das in Figur 1 gezeigte optische Element 1 besteht aus zwei Teilen 3, 3', die an der Fügefläche 2 zusammengefügt sind. Das optische Element ist als Sammellinse ausgebildet. Die Grenzflächen 6, 6' sind konvex gewölbt.

Auf der Fügefläche 2 ist eine Strahlenteilerschicht
5 in Form einer Ellipse aufgebracht. Der nicht mit
Strahlenteilerschicht bedeckte Bereich der Fügefläche
2 trägt eine Antireflexschicht.

Die parallel zur optischen Achse 8 einfallenden
Lichtstrahlen gehen teilweise durch das optische
Element durch (11) und werden teilweise ausgespiegelt
(12).

Die Anordnung der Strahlenteilerschicht 5 ist aus
Figur 2 besonders deutlich zu ersehen.

Das optische Element weist vorzugsweise einen
zylindrischen Rand auf, damit es leicht gefaßt
werden kann, sowie eine Abflachung 7 im Strahlengang der Ausspiegelung 12.

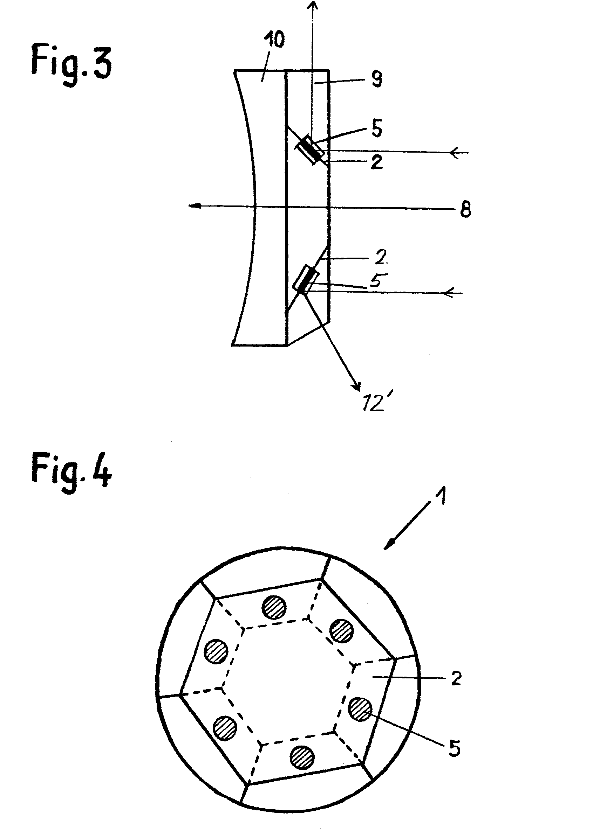

In Figur 3 ist ein optisches Element gezeigt, das
aus einer Platte 9 mit zwei Fügeflächen 2, 2'
besteht, die wiederum teilweise mit Strahlenteilerschicht 5 bedeckt sind. Die obere Fügefläche 2 weist
einen Winkel von 45° zur optischen Achse 8 auf,
während die untere Fügefläche 2' einen steileren
Winkel, nämlich 60° dazu aufweist.

Die Platte 9 ist mit einer Zerstreuungslinse 10 verbunden. Dies kann durch Verkitten oder Verschmelzen
erfolgen. Die Platte 9 kann auch mit zwei Linsen
verbunden sein.

Figur 4 zeigt schließlich ein optisches Element, bei
dem sechs Fügeflächen 2 radial angeordnet sind und
in Teilbereichen mit Strahlenteilerschicht 5 versehen sind. Bei einer solchen Ausgestaltung können sechs Informationen gleichzeitig ein- bzw. ausgespiegelt werden.

Die Strahlenteilerschicht soll senkrecht auf die Winkelhalbierende zwischen durchgehenden 11 und ausgespiegelten Strahlen 12 sein.

Die optischen Elemente gemäß der Erfindung zeichnen sich durch eine breite Variationsmöglichkeit aus, so daß allen Erfordernissen in optischer Hinsicht als auch in informativer Hinsicht nachgekommen werden kann. Die Ausgestaltung der optischen Elemente in Form einer Linse kann der Optik optimal entsprechen. Je nach Anzahl und Art der ein- und auszuspiegelnden Informationen können eine oder mehrere Fügeflächen in unterschiedlichster Anordnung und mit unterschied- lichster Aufbringung der Strahlenteilerschicht vorge- sehen werden.

Die Ausgestaltung als Linse hat noch den weiteren Vorteil, daß mit jeder gekrümmten Fläche ein Freiheitsgrad zur Korrektur der Optik erhalten wird.

Als Strahlenteilerschicht werden vorzugsweise di- elektrische Mehrfachschichten (Interferenzfilter) verwendet. Bei nahezu absorptionsfreier Teilung kann durch die Konstruktion des Schichtpaketes das Teilerverhältnis beliebig eingestellt werden.

Bei geeigneten Strahlenteilerschichten kann auch eine spektrale Aufteilung erfolgen. So sind beispielsweise Interferenzfarbteiler möglich, mit denen eine verlustarme Aufteilung eines Spektralbereichs, z.B. kurzwellige Reflexion und langwellige Transmission, erfolgt.

Als Material für das optische Element kommt in erster Linie Glas in Betracht. Es kann aber auch Kunststoff verwendet werden.

Wenn die Strahlenteilerschicht nur einen kleinen Teil des Strahlengangquerschnitts abdeckt, kann die Schicht als reine Spiegelschicht, d.h. vollständige Reflektion und keine Transmission ausgebildet sein. Der hier verwendete Ausdruck "Strahlenteilerschicht" umfaßt demnach auch Spiegelschichten. Bei Verwendung einer Spiegelschicht bleibt die gesamte Information erhalten. Es erfolgt lediglich ein geringfügiger Helligkeitsverlust.

Die Fügefläche 2 muß keine ebene Fläche sein, sondern kann für besondere Anwendungen beispielsweise eine Zylinder- oder Kugelfläche sein.

Für besondere Anwendungen kommt es in Betracht auf die reflektierten Strahlen anders optisch einzuwirken als auf die durchgehenden Strahlen. Dies ist besonders dann von Bedeutung, wenn in einem Fall eine gekrümmte Fläche und im anderen Fall eine ebene Fläche für verschiedene Betrachtungswinkel gleichzeitig paralaxfrei erscheinen sollen.

D. SWAROVSKI & CO.
Postfach 15
A-6112 Wattens
Österreich

---

Optisches Element

---

PATENTANSPRÜCHE

1. Optisches Element aus mindestens zwei zusammengefügten
   Teilen, wobei die Fügefläche eine Neigung zur optischen
   Achse aufweist und eine Strahlenteilerschicht trägt,
   die durch ihr Reflexions-/Transmissionsverhalten eine
   Teilung und/oder Zusammenführung optischer Strahlen bewirkt, d a d u r c h   g e k e n n z e i c h n e t ,
   daß zumindest eine der Grenzflächen (6, 6') des
   optischen Elements (1) eine sammelnde oder zerstreuende
   optische Wirkung aufweist.

2. Optisches Element nach Anspruch 1, d a d u r c h   g e -
   k e n n z e i c h n e t , daß die Fügefläche (2) nur
   teilweise mit der Strahlenteilerschicht (5) bedeckt ist.

3. Optisches Element nach Anspruch 1 oder 2, d a d u r c h
   g e k e n n z e i c h n e t , daß das optische Element (1)
   eine, zwei oder mehr Fügeflächen (2) aufweist.

4. Optisches Element aus mindestens zwei zusammengefügten Teilen, wobei die Fügefläche eine Neigung
zur optischen Achse aufweist und eine Strahlenteilerschicht trägt, die durch ihr Reflexions-/
Transmissionsverhalten eine Teilung und/oder
Zusammenführung optischer Strahlen bewirkt,
d a d u r c h   g e k e n n z e i c h n e t ,
daß die Fügefläche (2) nur teilweise mit der
Strahlenteilerschicht (5) bedeckt ist.

5. Optisches Element nach Anspruch 4, d a d u r c h
g e k e n n z e i c h n e t , daß zumindest eine
der Grenzflächen (6, 6') des optischen Elements
(1) eine sammelnde oder zerstreuende optische
Wirkung aufweist.

6. Optisches Element nach Anspruch 4 oder 5, d a -
d u r c h   g e k e n n z e i c h n e t , daß das
optische Element (1) zwei oder mehr Fügeflächen
(2) aufweist.

7. Optisches Element aus mindestens zwei zusammengefügten Teilen, wobei die Fügefläche eine Neigung
zur optischen Achse aufweist und eine Strahlenteilerschicht trägt, die durch ihr Reflexions-/
Transmissionsverhalten eine Teilung und/oder
Zusammenführung optischer Strahlen bewirkt,
d a d u r c h   g e k e n n z e i c h n e t ,
daß das optische Element (1) zwei oder mehr
Fügeflächen (2) aufweist.

8. Optisches Element nach Anspruch 7, d a d u r c h
g e k e n n z e i c h n e t , daß zumindest eine
der Grenzflächen (6, 6') des optischen Elements
(1) eine sammelnde oder zerstreuende optische
Wirkung aufweist.

9. Optisches Element nach Anspruch 7 oder 8, d a - d u r c h   g e k e n n z e i c h n e t , daß die Fügefläche (2) nur teilweise mit der Strahlenteilerschicht (5) bedeckt ist.

10. Optisches Element nach einem der Ansprüche 1 bis 9, d a d u r c h   g e k e n n z e i c h n e t , daß die Fügefläche (2) nur einen Teil des Strahlengangquerschnitts einnimmt.

11. Optisches Element nach einem der Ansprüche 1 bis 10, d a d u r c h   g e k e n n z e i c h n e t , daß die Dicke des optischen Elements (1) in Richtung der optischen Achse (7) geringer ist als senkrecht dazu.

12. Optisches Element nach einem der Ansprüche 1 bis 11, d a d u r c h   g e k e n n z e i c h n e t , daß die Fügefläche (2) azentrisch nur teilweise mit der Strahlenteilerschicht (5) bedeckt ist.

13. Optisches Element nach einem der Ansprüche 1 bis 12, d a d u r c h   g e k e n n z e i c h n e t , daß die Strahlenteilerschicht (5) in Form einer Ellipse auf der Fügefläche (2) vorgesehen ist.

14. Optisches Element nach einem der Ansprüche 1 bis 13, d a d u r c h   g e k e n n z e i c h n e t , daß die nicht mit Strahlenteilerschicht (5) bedeckten Bereiche der Fügefläche (2) mit einer Antireflexschicht versehen sind.

15. Optisches Element nach einem der Ansprüche 1 bis 14, d a d u r c h   g e k e n n z e i c h n e t , daß das optische Element (1) die Form einer Platte (9) aufweist.

16. Optisches Element nach einem der Ansprüche 1 bis 15, d a d u r c h  g e k e n n z e i c h - n e t , daß das optische Element (1) mit einer oder zwei Linsen (10) verkittet ist.

17. Optisches Element nach einem der Ansprüche 1 bis 16, d a d u r c h  g e k e n n z e i c h - n e t ,  daß das optische Element (1) einen zylindrischen Rand und eine Abflachung (7) aufweist.

18. Optisches Element nach einem der Ansprüche 1 bis 17, d a d u r c h  g e k e n n z e i c h- n e t ,  daß die Fügefläche (2) außeraxial zur optischen Achse (8) angeordnet ist.

19. Optisches Element nach einem der Ansprüche 1 bis 18, d a d u r c h  g e k e n n z e i c h - n e t, daß die Fügefläche (2) einen von 45° verschiedenen Winkel zur optischen Achse (8) einnimmt.

20. Optisches Element nach einem der Ansprüche 1 bis 19, d a d u r c h  g e k e n n z e i c h - n e t ,  daß das optische Element (1) zwei oder mehr Fügeflächen (2) aufweist.

0 209 108

Fig. 1

Fig. 2

Fig.3

Fig.4

0 209 108